(19) Europäisches Patentamt
European Patent Office
Office européen des brevets

(11) Publication number: 0 162 996
A1

# (12) EUROPEAN PATENT APPLICATION

(21) Application number: 84850167.2

(22) Date of filing: 30.05.84

(51) Int. Cl.⁴: H 01 M 10/34

(43) Date of publication of application:
04.12.85 Bulletin 85/49

(84) Designated Contracting States:
BE DE FR GB IT NL

(71) Applicant: AB Tudor
S-440 41 Nol(SE)

(72) Inventor: Sundberg, Erik
447 Union Street
Newtown, Pa. 18940(US)

(74) Representative: Bergvall, Sven et al,
Bergenstrahle & Lindvall AB Sankt Paulsgatan 1
S-116 47 Stockholm(SE)

## (54) Lead-acid battery construction including improved means for oxygen recombination.

(57) A rechargeable *lead-acid battery* construction includes a combination of specially-constructed electrodes and separator materials which provides for *improved oxygen* recombination during charging while permitting the presence of an excess of operating electrolyte. Battery cells of this nature are self-regulating such that cell voltages during constant current charging are limited to approximately 2.38 volts. Several embodiments are disclosed, each having conventional positive (48, 54) and negative (58) "operating" electrode portions spaced apart by relatively thick, high resistance separator materials (64) and also including "*oxygen-evolving*" positive electrode portions (56) and thin, low-capacity "*recombining*" negative electrode portions (60) spaced apart by relatively thin, low-resistance separator materials (66). *Electrode sets* which provide cell voltage limitation and oxygen recombination and which may be *added* to otherwise conventional lead-acid battery cells are also disclosed.

Fig. 4

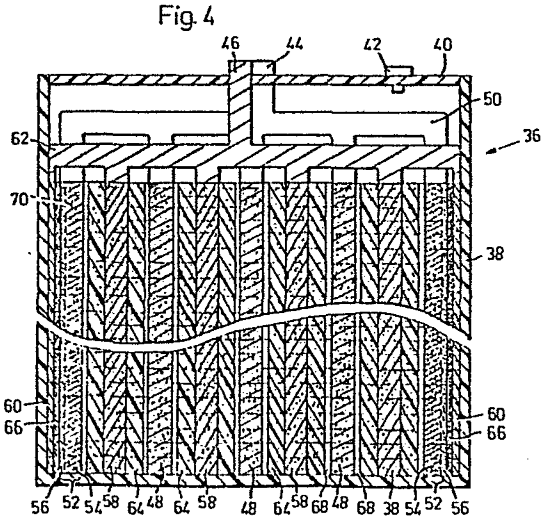


EP 0 162 996 A1

Croydon Printing Company Ltd

## BACKGROUND OF THE INVENTION

It is known to the battery art that, during charging of a lead-acid battery cell of antimony-free nature, oxygen may be evolved at the surfaces of positive electrodes when the cell voltage exceeds approximately 2.38 volts. This corresponds to an 85 - 90% state-of-charge. It is also known that hydrogen may be evolved at the surfaces of negative electrodes, but that this evolution occurs only after the cell has reached a 99 - 99.5% state-of-charge. It is possible, therefore, to construct sealed lead-acid cells which require no addition of water to the electrolyte provided that charging is carefully monitored such that cell voltages during charge never exceed 2.38 volts. However, such precise control of cell voltages is relatively expensive. Also, since most batteries comprise a plurality of cells connected in series and since charging characteristics (e.g. capacity) may vary from cell to cell, most often some cells will be undercharged while others will evolve oxygen.

It is known to the art that oxygen evolved at a positive electrode will have the ability to oxidize the surface of a charged negative electrode according to

$$2Pb + O_2 \rightarrow 2PbO$$

and that, in the presence of a sulfuric acid electrolyte,

$$PbO + H_2SO_4 \rightarrow PbSO_4 + H_2O.$$

Thus oxygen, should it be evolved at a positive electrode and find its way to a negative electrode, will be recombined with hydrogen to produce water while partially discharging the negative electrode (which may then, of course, be recharged). Sealed lead-acid battery cells

have been constructed utilizing this principle. However, to date, these cells have also included a so-called "starved electrolyte" condition.

In order to insure that evolved oxygen will have relatively easy access to a charged negative electrode surface the spacing or distance between positive and negative electrodes is kept relatively small. Separator materials are used to space the electrodes apart from one another and these materials are also used to absorb electrolyte, keeping the said electrolyte in contact with electrode surfaces. However, if these separators are fully saturated with electrolyte the oxygen will not have sufficient access to the negative electrode surfaces. Therefore these separators are generally maintained at a 70 - 90% saturation level. Since the separators are thin (required by the close spacing between electrodes) they may not be able to absorb sufficient electrolyte for some applications without exceeding the saturation limit required for oxygen passage, and so the electrodes are "starved" of electrolyte. The capacity of battery electrodes varies in an inverse relationship to the discharge rate, and so lower discharge rates and deep discharges may require more electrolyte than is available in this so-called "starved electrolyte" configuration.

A second drawback of this type of cell is their tendency to form dendritic growths between electrodes, causing internal short circuits. Should the cell be discharged to an extent such that the electrolyte becomes depleted of $SO_4^-$ ions, soluble lead hydrates may be formed at the negative electrodes. These hydrates form dendritic structures which penetrate into the separators. When the cell is recharged, the hydrates are reduced to lead, which ultimately causes an internal short circuit and failure of the cell.

## SUMMARY OF THE INVENTION

This invention relates to the lead-acid battery art, and in particular to batteries and battery cells wherein oxygen is evolved at surfaces of positive electrodes and recombined at surfaces of negative electrodes during the charging process.

It is a first object of this invention to provide a sealed rechargeable lead-acid battery cell having the capability of recombining oxygen evolved during a charging process, but still containing a quantity of electrolyte sufficient to allow deep discharges at low rates without adversely affecting the life of the said cell.

It is another object of this invention to provide a sealed rechargeable lead-acid battery cell in which the formation of dendritic growths and short circuits between electrodes is substantially eliminated.

It is a third object of this invention to provide sealed rechargeable lead-acid battery cells which may be interconnected in series configuration to constitute a battery, and in which the voltage of each of these cells, during a constant-current charging process, is self-limited to approximately 2.38 volts.

It is still another object of this invention to provide electrode sets, which may be included in or added to rechargeable lead-acid battery cells of otherwise substantially conventional construction to render the said cells capable of operating in a sealed condition wherein recombination of oxygen evolved during a charging process takes place.

It has been found that these and other objectives may be realized by the provision of positive electrode means having "$O_2$ evolving" and "operating" portions, either as parts of the same elec-

trodes or as separate electrodes, and negative electrode means having "recombining" and "operating" portions, which also may occur either as parts of the same electrodes or as separate electrodes. The "operating" portions of the positive and negative electrode means have substantially greater capacity than the "$O_2$ evolving" and "recombining" portions, and these "operating" portions are spaced apart from one another by relatively thick, high-resistance separator materials. The "$O_2$ evolving" portions of the positive electrode means are separated from the "recombining" portions of the negative electrode means by relatively thin, low-resistance separator materials.

## BRIEF DESCRIPTION OF THE DRAWING

FIGURE 1 is a perspective view of an example of a multicellular motive power battery of the invention.

FIGURE 2 is a perspective view of an example of an SLI battery of the invention.

FIGURE 3 is a perspective view of a single cell of a motive power battery of the invention.

FIGURE 4 is a vertical cross-sectional view of the cell of Figure 3, illustrating component parts thereof.

FIGURE 5 is a horizontal cross-sectional view of the cell of Figure 3, also illustrating component parts thereof.

FIGURE 5A is a perspective view, generally illustrating a pasted-type positive or negative electrode.

FIGURE 6 is a diagrammatic representation of a cell similar to that of Figures 3 - 5, connected to charging means, and indicating paths of flow of charging current.

FIGURE 7 is a graphical representation showing changes in relative magnitudes of charging current components with respect to time.

FIGURE 8 is a diagrammatic representation similar to Figure 6 but showing the cell connected to load means and indicating paths of flow of discharge current.

FIGURE 9 is a graphical representation showing changes in relative magnitudes of discharge current components with respect to time.

FIGURE 10 is a fragmentary cross-sectional view illustrating a "flooded" cell of a battery of the invention.

FIGURE 11 is a cross-sectional view illustrating one form of a set of recombining electrodes of the invention.

FIGURE 12 is a perspective view, greatly enlarged, illustrating another form of a set of recombining electrodes of the invention, including electrodes fabricated from foil bodies.

FIGURE 13 is a perspective view, also greatly enlarged, illustrating still another form of recombining electrode set, also including electrodes fabricated from foil bodies.

FIGURE 14 is a perspective view depicting a "raw" form of foil body from which positive or negative electrodes having both operating capacity and recombining ability may be produced.

FIGURE 15 is a cross-sectional view of a negative electrode of the invention produced from the foil body of Figure 14.

FIGURE 16 is a vertical cross-sectional view of an electrode group including positive and negative electrodes produced from the foil body of Figure 14.

FIGURE 17 is a cross-sectional view illustrating a negative electrode similar to that of Figure 15, but produced from two separate foil bodies.

FIGURE 18 is a perspective view, partially broken away, of a cylindrical cell of the invention including positive and negative electrodes produced from the foil body of Figure 14.

FIGURE 19 is a perspective view illustrating a pasted type negative electrode of the invention, having recombining upper portions.

FIGURE 20 is a fragmentary vertical cross-sectional view of the electrode of Figure 19.

FIGURE 21 is a view similar to Figure 20, but illustrating an alternative form of recombining portions.

FIGURE 22 is a fragmentary vertical cross-sectional view illustrating a battery cell of the invention including negative electrodes similar to that shown in Figure 21.

FIGURE 23 is a view similar to Figure 22, but including tubular positive electrodes having plastic covers over upper portions thereof.

## DETAILED DESCRIPTION OF THE INVENTION

Referring in detail to the Drawing, Figure 1 illustrates one type of rechargeable lead-acid battery means of the invention, generally denoted by the arrow 2, comprising a plurality of battery cells as 4 received in a common enclosure body or "tray" 6. Each cell as 4 presents a positive lug as 8 and a negative lug as 10 at an upper side thereof, and the cells are electrically interconnected in a series configuration by means of cell connectors as 12, which are of conventional nature. Each cell as 4 may also include one-way pressure-relief valve means as 14. Positive and negative terminal posts, denoted by the numerals 16 and 18 respectively, are provided at ends of the series connection of battery cells. Battery means 2 may be considered representative of "motive power," "load-leveling" or "UPS" (Uninterrupted Power Supply) battery types, for example.

Another form of rechargeable lead-acid battery means of the invention is illustrated in Figure 2, wherein it is denoted by the arrow 20. Battery means 20 comprises a jar body 22, sealed at an upper side by means of a cover member 24, and internally divided by means of partitions as 26 into a plurality of separate cell compartments as 28 in which components may be received to constitute battery cells. Cells of this type may be connected in series with one another through partitions as 26 in a conventional manner. Positive and negative terminal posts, denoted by the numerals 30 and 32 respectively are provided at ends of the series connection of battery cells, and extend through the cover member 24 in sealed relationship therewith. One-way pressure-relief valve means as 34 may be associated with each

of the cells, and may also be located through cover members 24 in sealed relationship therewith. Battery means 20 may be considered representative of "automotive," "emergency lighting," "light utility" or "SLI" (starting, lighting and ignition) battery types, for example.

It is pointed out that rechargeable lead-acid battery means of the invention may include both of the types disclosed above, as well as other types, some of which will be disclosed below. To insure clarity of disclosure, a detailed description directed toward batteries of the first type (arrow 2 of Figure 1) is presented below, and it is understood that this presentation will be representative of other types of batteries as well.

Figure 3 illustrates, in general, a single battery cell arrow 36 which may correspond to one of the cells as 4 in Figure 1. Cell 36 comprises a jar body 38, in which may be received an arrangement of parts including positive and negative electrode means, separator means and an electrolyte body. Jar body 38 may be sealed at its upper side by a cell cover 40, which may include one-way pressure-relief valve means 42. Extending through cell cover 40, in sealed relationship therewith, are positive and negative lugs denoted by numerals 44 and 46 respectively.

Figure 4 and 5 are cross-sectional views of cell arrow 36, illustrating in detail an arrangement of parts which may be received in jar body 38. Included in this arrangement of parts is positive electrode means comprising a plurality of positive electrodes as 48, which are of conventional construction, which may be either "flat" or "tubular" in nature, and which may be electrically interconnected to one another in parallel relationship by means of a positive bridge member 50. Positive

lug 44 extends upward from positive bridge member 50, through cell cover 40 as previously disclosed. All of these positive electrodes as 48 may be substantially identical, but the outermost of these electrodes, denoted by numerals as 52, may be considered to comprise two portions: a conventional "operating" portion as 54 and an "$O_2$ evolving" portion as 56. The function of these two portions will be disclosed in detail below.

Also included in the arrangement of parts is negative electrode means comprising a plurality of negative electrodes of conventional construction as 58, interleaved between the positive electrodes as 48, 52, and two thin, "recombining" negative electrodes as 60, located outside of the positive electrodes as 52. The "recombining" electrodes as 60 are constructed such that they have substantially less discharge capacity than conventional negative electrodes as 58. Negative electrodes as 58, 60 may be electrically interconnected to one another by means of negative bridge member 62. Negative lug 46 extends upwardly from negative bridge member 62, through cell cover 40 as previously disclosed.

Interleaved between adjacent electrodes as 48, 52, 58, 60 is separator means comprising two separate and distinct types: separators as 64, lying between electrodes as 48, 52, 58 are relatively thick and have a relatively high resistance, while separators as 66, lying between electrodes as 52, 60 are quite thin and have a relatively low resistance. Separators as 64 may include ribs as 68 on sides facing positive electrodes as 48, 52. An electrolyte body 70, primarily comprising $H_2SO_4$, is received in jar member 38, saturating the various separators and other components.

Figure 5A illustrates in general a battery electrode, denoted by the arrow 51, which may be representative of either positive and negative electrodes as 48, 52, 58, 60 in a "pasted" form. In this Figure numeral 53 denotes a grid structure fabricated from a lead alloy and comprising an outer frame with a plurality of cross-members interconnecting opposite sides of the said frame. A connecting lug 55 extends upwardly from the upper part of the said frame. Received within the frame is an electrochemically formed active material body which may be divided into "pellets" as 57. In the case of positive electrodes, the active material may comprise lead oxides in a "pasted" form and, in the case of negative electrodes, the active material body may primarily comprise "sponge lead" also in a "pasted" form. It is pointed out that the configuration of the grid structure may vary from that shown, and that the relative thicknesses of these electrodes may also vary.

It is known to the art that during charging of a conventional lead-acid battery, wherein pure lead is used in the grids of the electrodes, oxygen will be evolved at the surface of the positive electrode when the potential of the cell undergoing the charging process reaches 2.38 - 2.40 volts, i.e. when it is 85 - 90% charged. It is also known that hydrogen is generally not evolved until the negative electrodes are 99.0 - 99.5% charged and, when hydrogen evolution does occur, that this evolution takes place at the surface of the negative electrodes, and that this 99.0 - 99.5% state-of-charge of the negative electrodes is not reached until the cell potential substantially exceeds 2.4 volts. Thus it is theoretically possible to provide a sealed lead-acid cell, capable of continual operation without the addition of water, provided that the cell potential during charging is very carefully regulated and restricted to a magnitude less than 2.38 volts. This, however, is not a very practical approach as it may be relatively expensive to provide charging means capable of such precise restriction. In addition, most lead-acid batteries comprise a plurality of cells connected in series and, since such cells are never precisely identical, some cells may exceed this potential while others may not reach it.

It is also known to the art that gaseous oxygen, whether evolved at the positive electrode or arising from another source, will have the ability to partially oxidize a charged negative electrode according to the following reaction:

$$2Pb + O_2 \rightarrow 2PbO$$

and that, in the presence of a sulfuric acid electrolyte,

$$PbO + H_2SO_4 \rightarrow PbSO_4 + H_2O.$$

Thus it can be seen that oxygen may be "recombined" to produce water at the surface of a negative electrode. Indeed, many commercially-available so-called "sealed" lead-acid cells utilize this principle, in combination with carefully controlled charging.

However, commercially-available sealed lead-acid cells having this type of oxygen-recombining operation also exhibit certain drawbacks. Perhaps the most serious of these arises from the fact that oxygen evolved at the surface of the positive electrode must be brought into contact with the surface of the negative electrode in some fashion.

The most commonly-used approach to a solution of this problem has been the utilization of the so-called "starved electrolyte" principle. Bearing in mind the fact that these prior art cells are customarily manufactured with only one type of positive electrode, one type of negative electrode and a uniform separator configuration, it

can be seen that oxygen may be evolved at the surface of any of the positive electrodes and recombined at the surface of any adjacent negative electrode. In order that evolved oxygen, which is in the gaseous phase, may have relatively free access to the surface of the negative electrodes the distance between adjacent positive and negative electrodes is kept small (preferably less than 2 mm), and the separators, which may be fabricated from a microfibrous material such as glass, are not fully saturated with electrolyte. The degree of saturation is commonly 70 - 90%. Should the degree of saturation be greater, approaching 100%, oxygen transport is inhibited and recombination may not take place.

It is known that, as the discharge rate of a lead-acid cell is increased, the capacity of its electrodes is decreased. This, in turn, means that amount of electrolyte necessary to provide full electrode capacity at these higher rates may be substantially less than that required for discharge at lower rates. Thus these prior art cells, in order to preserve the short distance between electrodes and the 70 - 90% degree of saturation, contain only sufficient electrolyte to provide full capacity at a relatively high discharge rate. This is what is meant by a "starved electrolyte" condition.

It is also known that an increased internal cell pressure may enhance the recombination process. The actual recombination reaction takes place in the liquid phase and, by the time the evolved oxygen has reached the wet surface of the negative electrode, it must be dissolved in the electrolyte. The solubility of oxygen in the electrolyte will be directly proportional to the pressure.

However, cells which utilize this "starved electrolyte" approach may exhibit certain serious drawbacks. Should such a cell

be discharged at a lower rate, or should a discharged cell be allowed to stand in this condition for an extended period of time, the electrolyte ($H_2SO_4$) may become so depleted of $SO_4^{=}$ ions that soluble lead hydrates may be formed at the negative electrodes. These hydrates tend to form dendritic structures penetrating the separators. When the cell is recharged these hydrates are reduced to lead, which may ultimately bridge between positive and negative electrodes causing internal short circuits and failure of the cell. This phenomenon is known to the art as "treeing."

The foregoing drawbacks have been overcome in the instant invention by the arrangement of parts previously disclosed in connection with cell arrow 36 of Figures 4 and 5. The following characteristics of this arrangement are emphasized:

(1) Separators as 64 are substantially thicker than and have a higher resistance than thin separators as 66;

(2) the thickness of separators as 64 is sufficient to absorb an amount of electrolyte which is substantially in excess of that required to yield the full capacity of positive electrodes as 48, the "operating" portions as 54 of positive electrodes as 52 and negative electrodes as 58, even under low rate or deep discharge conditions, while still maintaining separators as 64 in a 70 - 90% degree of saturation;

(3) the capacity of the "recombining" negative electrodes as 60 is substantially less than that of the "conventional" negative electrodes as 58;

(4) the thickness of thin separators as 66 is sufficient to absorb an amount of electrolyte which is substantially in excess

of that required to yield the full capacity of the "recombining" negative electrodes as 60 and the "$O_2$ evolving" portions as 56 of positive electrodes as 52 even under low rate or deep discharge conditions, and

(5) the density of the electrolyte body 70 is substantially constant throughout the cell 36.

Figure 6 illustrates diagrammatically a rechargeable lead-acid cell of the present invention, similar to cell 36 of Figures 4 and 5, connected to charging means 72 which charging means comprises a source of constant-valued direct electrical current. In this figure parallel combinations of the component parts illustrated in Figures 4 and 5 are represented by symbols, and these symbols are denoted by the same numerals as in Figures 4 and 5 but carrying an "A" suffix. Thus numeral 48A denotes the parallel combination of positive electrodes as 48 in Figures 4 and 5, etc.

Charging means 72 provides a total charging current $I_T$ to the cell 36A. This is of a constant value throughout the charging process. Current $I_T$ is represented in Figure 6 as dividing into two principal components, $I_1$ and $I_2$. Current $I_1$ flows through one portion of the cell comprising positive electrodes 48A, "operating" portion 54A of positive electrodes 52A, separators as 64A, and conventional negative electrodes 58A. Current $I_2$ flows through "$O_2$ evolving" portions 56A of positive electrodes 52A, thin separators as 66A, and "recombining" negative electrodes 60A. It is pointed out that

$$I_T = I_1 + I_2$$

Figure 7 illustrates in general the relative magnitudes of currents $I_T$, $I_1$ and $I_2$ during the charging process, as well as that of the overall cell voltage V. Operation of the cell during charging

may be most readily understood by referring to this Figure and to Figure 6.

At time $t_0$ (Figure 7), the beginning of the charging process, all electrodes are in a discharged state and so their "acceptance" (ability to accept a charging current) is high. However, since the resistance of separators as 64A (Figure 6) is substantially greater than the resistance of separator 66A, most of the charging current will flow through the "$O_2$ evolving" portion 56A of positive electrode 52A to "recombining" negative electrode 60A. Thus $I_1$ will be substantially greater than $I_2$.

During the interval $t_0 - t_1$ (Figure 7) the "$O_2$ evolving" portions 56A of positive electrodes 52A and the "recombining" negative electrodes 60A become charged very quickly because of the very low capacity of "recombining" electrodes 60A. This reduces the acceptance of these pairs, and thus current component $I_1$ will decrease sharply in magnitude. Since charging means 72 is providing a constant current $I_T$, such that

$$I_T = I_1 + I_2,$$

current component $I_2$ will increase sharply in magnitude over this interval.

During the interval $t_1 - t_2$ the majority of the current $I_T$ provided by charging means 72 will be directed into current component $I_2$, which will charge positive electrodes 48A, the "operating" portion 54A of positive elecrodes 52A, and conventional negative electrodes 58A. As these electrodes become more fully charged their acceptance will decrease as did the acceptance of electrode parts 56A and 60A during the interval $t_0 - t_1$, but interval $t_1 - t_2$ will be of substantially

longer duration, and the decrease in acceptance much more gradual, because of the higher capacity of electrode parts 48A, 54A and 58A. This decrease in acceptance will reduce current component $I_2$ accordingly, and current component $I_1$ will gradually increase.

During the interval $t_2 - t_3$ the magnitude of current component $I_2$ will decrease sharply, and that of $I_1$ will increse sharply. This phenomenon will take place because the acceptance of electrode parts 48A, 54A and 58A will be reduced during this interval to such an extent that the principal factor governing the relative magnitudes of components $I_1$ and $I_2$ will be the resistances of separators 64A and 66A. As earlier disclosed separator 66A has a substantially lower resistance than separator 66A, and thus the majority of the charging current $I_T$ will follow this path of least resistance, i.e. $I_1$. At time $t_3$ the cell may be considered to be substantially charged.

During the remainder of the charging process, from time $t_3$ on, the overall cell voltage will have reached 2.38 volts, which is the potential at which oxygen may be evolved at the surface of the positive electrodes. Oxygen will be evolved at those portions of the positive electrodes which are most fully charged, that is, at the surface of "$O_2$ evolving" portions 56A of electrodes 52A. The evolved oxygen will pass through thin separators 66A and come into contact with the surface of "recombining" negative electrode, where it will oxidize this surface according to the reaction

$$2Pb + O_2 \rightarrow 2PbO.$$

Sulfuric acid ($H_2SO_4$) is present, and thus the PbO will be sulfated according to the reaction

$$PbO + H_2SO_4 \rightarrow PbSO_4 + H_2O.$$

The evolved oxygen, therefore, will be recombined into water ($H_2O$) by the above reactions.

Also, it is pointed out that, since one of the products of the above reactions taking place at the "recombining" negative electrodes 60A is $PbSO_4$, these electrodes 60A will be partially discharged by these reactions. When this occurs the cell voltage will fall slightly below the 2.38 volts required for oxygen evolution, and no more oxygen will be produced.

The partial discharge of "recombining" negative electrode 60A will slightly increase the acceptance of these electrodes and thus current component $I_1$ will increase slightly while current component $I_2$ will decrease slightly. Current component $I_1$ will recharge electrodes 60A, causing a slight decrease in its acceptance, thereby producing a slight decrease in current component $I_1$ and a slight increase in current component $I_2$. This recharging also allows the cell voltage to rise to 2.38 volts, whereupon oxygen may again be evolved at the surface of "$O_2$ evolving" portions 56A of positive electrodes 52A. This cycle may be repeated indefinitely, as long as the cell remains connected to charging means 72. Thus, a plurality of similar cells may be connected in series to provide a battery of the invention such as that denoted by the arrow 2 in Figure 1, and the cells themselves will limit their own voltage. This enables such a battery to be charged by a relatively inexpensive constant-current charging means without the danger of an imbalance between cells.

Figure 8 is a diagrammatic representation similar to Figure 6, but showing the cell 36A connected to load means 74. Current components similar to $I_T$, $I_1$ and $I_2$ flow through the same parts of the

cell, but in a reverse direction as shown; these are denoted $I_T'$, $I_1'$ and $I_2'$ respectively. Figure 9 illustrates the relative magnitudes of these current components, as well as overall cell voltage V'.

Referring to Figure 9, at time $t_0'$ (the start of the discharge), most of the load current $I_T'$ may be supplied by the "$O_2$ evolving" portions 56A of positive electrodes 52A and "recombining" negative electrodes 60A. This current component is denoted $I_1'$; it is substantially higher than current component $I_2'$ because the resistance of separators 66A is substantially less than that of separators 64A.

However, the capacity of the "recombining" negative electrodes 60A is quite low, as earlier disclosed, and thus over the interval $t_0'$ - $t_1'$ electrodes 60A will be quickly discharged and current component $I_1'$ will decrease sharply in magnitude, while current component $I_2'$ will increase sharply. After time $t_1'$ substantially all of the load current $I_T'$ arises from electrode parts 48A, 54A, 58A via current $I_2'$.

It is also possible to construct a cell according to the instant invention having an excess of electrolyte in a so-called "flooded" condition. Such a cell is illustrated in Figure 10, wherein it is denoted by the arrow 76. An electrode group, generally denoted by the arrow 78, is received in a jar body 80. Electrode group 78 may correspond to the arrangement of parts disclosed in connection with Figure 4, including positive electrodes as 48, 52 negative electrodes as 58, 60 and separators as 64, 66 in this Figure. Also received in jar body 80 is an electrolyte body 82, extending over the top of the electrode group 78. Cell 76 is sealed at its upper side by cell cover 84, through which extend in sealed relationship thereto positive lug 86 and negative lug 88. In this cell 76, when oxygen is produced at the surface of "$O_2$

evolving" portions of the outermost positive electrodes, a small internal pressure may be generated. This will insure that additional evolved oxygen will form small bubbles which will first "push aside" the electrolyte in the thin separators, and be transported to the surface of the "recombining" negative electrodes where they will dissolve in the electrolyte. Alternatively, the cell may be given a small deliberate overpressure by pressurizing with nitrogen or an inert gas, for example. Oxygen recombination will occur in the same fashion as previously disclosed.

In the design of any battery or cell according to this invention it is important to balance the thicknesses of the various electrodes and separators such that the utilization of the electrolyte during discharge will be uniform throughout the cell in order to prevent a localized deficiency of $SO_4^=$ ions and subsequent "treeing." It is essential that the lead alloys used throughout the cells be free from antimony. It is also important to provide a sufficient surface area for the "recombining" negative electrodes, and thus it may be desirable to include one or more additional sets of recombinant electrodes, which may take one of the forms disclosed below. Such electrode sets need not necessarily be combined with an arrangement of parts precisely as that disclosed in connection with Figures 4 - 9, but may also be used in cells of more conventional construction and still provide oxygen recombination and cell voltage limitation.

One embodiment of such an electrode set, denoted by the arrow 90, is illustrated in Figure 11. In this Figure numerals as 92 denote positive electrodes, numerals as 94 denote thin, low-resistance separators, and numeral 96 denotes a "recombining" negative electrode.

Such electrode sets may be included in place of one or more conventional positive electrodes in a battery cell such as cell 36 of Figure 3, or in place of one or more positive electrodes as 48 in Figures 4 and 5, for example. Positive electrodes as 92 will be electrically interconnected in parallel with the other positive electrodes within the cell, and "recombining" negative electrode 96 will be electrically connected in parallel with the other negative electrode within the cell. Again, other separator materials included in the cell must be of substantially greater thickness and higher resistance than the thin separators as 94, as previously disclosed. Oxygen recombination and cell voltage limitation will take place in the same manner as previously disclosed.

It is pointed out that positive electrodes as 92 may be thinner than the other positive electrodes in the cell. It is only necessary that the pair of positive electrodes as 92, taken together, have a capacity equivalent to that of each of the other positive electrodes plus sufficient extra capacity to balance the relatively low capacity of "recombining" negative electrode 96. Similarly, each positive electrode as 52 of Figures 4 and 5 may have a capacity (in its "operating" portion as 54) only equivalent to one-half of the capacity of one of the conventional positive electrodes as 48, plus additional capacity (in its "$O_2$ evolving" portion 56) sufficient to balance the capacity of a "recombining" negative electrode as 60.

Another form of electrode set, which may be added to virtually any cell of conventional nature to provide oxygen recombination and cell voltage limitation is illustrated in Figure 12, wherein it is generally denoted by the arrow 98. Electrode set 98 comprises a thin central positive "foil" electrode 100, a pair of thin, low-resistance

separator members as 102, and a pair of thin "recombining" negative "foil" electrodes as 104.

Positive "foil" electrode 100 comprises a central reinforcing substrate 106 of a plastic material such as polyester, to which is affixed, on both sides thereof, a layer of $PbO_2$ as 108. This electrode may be fabricated, for example, by depositing layers of lead upon either side of the substrate 106 by vacuum deposition or by other means, and then electrochemically forming the lead in an acid bath to transform it into $PbO_2$. All of the $PbO_2$ of this electrode may be considered to be an "$O_2$ evolving" portion.

"Recombining" negative "foil" electrodes as 104 may comprise a similar substrate as 110, having a layer of lead affixed to one side. Negative electrodes as 104 may then be electrochemically formed by a "Planté formation" process or may be chemically etched such that outer layers as 112 of sponge lead are produced while inner layers of solid lead as 114 are maintained. The sponge lead layers as 112 define and limit the capacity of negative electrodes as 104 since the solid lead layers as 110 do not enter into the reaction; rather, these layers as 114 function as current carrying means. The capacity of each of the $PbO_2$ layers as 108 of positive electrode 100 should be somewhat greater than the capacity of a sponge lead layer as 112 of a "recombining" negative electrode as 104, so that layers as 108 never become fully sulfated during discharge.

One or more electrode sets as 98 may be included in virtually any battery cell to constitute a battery cell of the invention. "Recombining" negatives as 104 will be electrically connected in parallel with the other negative electrodes within the cell, and thin positive

electrodes as 100 will be electrically connected in parallel with the other positive electrodes within the cell. It is emphasized that separators as 102 must be thinner than and have a substantially lower resistance than the other separators within the cell.

It is pointed out that "recombining" negative electrodes as 60 of Figures 4 and 5 may be of a construction similar to "recombining" negative electrodes 104 of Figure 12, as an alternative to the "pasted" form disclosed in connection with Figure 5A.

A similar electrode set, generally denoted by the arrow 116 in Figure 13, comprises a single "recombining" negative "foil" electrode 118, substantially identical to "recombining" negative "foil" electrode 104 of Figure 12. A thin positive "foil" electrode 120, comprising a substrate 122 having a layer 124 of $PbO_2$ affixed to only one side, is spaced apart from negative electrode 118 by a thin separator member 126. Similar rules for construction of the electrode set and its connection within a cell will apply.

Electrode sets as 98 (Figure 12) and 116 (Figure 13) function in exactly the same manner as previously disclosed in connection with earlier Figures. Current components similar to $I_1$, $I_1'$ (Figures 5 and 7) will flow through the remaining electrodes in the cell.

It is possible to construct "foil" type electrodes having both the recombining and voltage limiting features characteristic of electrodes of the invention and relatively high capacity operating characteristics. A "raw" form of such an electrode is illustrated in Figure 14, wherein it is generally denoted by the arrow 128.

Electrode 128, in this so-called "raw" form, comprises a plastic substrate 130, having a thin layer 132 of lead affixed to one

side and a relatively thick layer 134 of lead affixed to the other side. A "rule of thumb" may be that layer 134 should be about 10 times thicker than layer 132.

A positive electrode may be fabricated from such a "raw" electrode 128 simply by electrochemically forming all of the lead in layers 132, 134 into $PbO_2$. Layer 132 will thus become an "$O_2$ evolving" portion, and layer 134 an "operating" portion.

A negative electrode may also be fabricated from a "raw" electrode such as electrode 128. Such an electrode, however, must have a final form such as that illustrated in Figure 15, wherein it is denoted by the arrow 136. In this Figure numeral 138 denotes a plastic substrate, corresponding to substrate 130 of Figure 14. On one side of substrate 138 is a thin layer of lead arrow 140, which is divided into two portions, one portion 142 being solid lead and the other portion 144 being "sponge" lead. Portion 144 is a "recombining" portion, while portion 142 is a "current-carrying" portion. On the other side of substrate 138 is a relatively thick layer of lead arrow 146, which is also divided into two portions, one portion 148 being a "current-carrying" portion of solid lead and the other portion 150 being an "operating" portion of sponge lead. Current-carrying portions 142, 148 may comprise roughly 50% of layers 140, 146 respectively. Sponge lead portions 144 and 150 may be produced by etching, by Planté formation, or by other means. It may be necessary during this production of sponge lead portions 144 and 150 to first provide the thin lead layer 140 (corresponding to layer 132 of "raw" electrode 128, Figure 14) with a protective coating to preclude chemical/electrochemical reaction at this portion, and then produce about 90% of the desired

sponge lead portion 150 (45% of the full lead layer 146). Thereafter the protective coating may be removed, and the process continued until 50% of thin lead layer 140 has been transformed into lead portion 144 and sponge lead portion 150 has been increased to 50% of layer 146.

Figure 16 illustrates a typical electrode group arrow 152 comprising such electrodes. Positive electrodes as 154 and negative electrodes as 156 are interleaved in staggered form as shown, with the low-resistance separator members as 158 and thick, high-resistance separators as 160 interleaved therebetween. Positive electrodes as 154 may be interconnected at one side of group 152 by a cast lead body 162, and negative electrodes may be interconnected at the other side of group 152 by another cast lead body 164.

Practicality of production may require that negative electrodes of this type be fabricated from two separate bodies as shown in Figure 17. In this Figure numeral 166 denotes a plastic substrate to one side of which is affixed a thin lead layer arrow 168. About 50% of lead layer 168 comprises a "recombining" sponge lead portion 170, produced by etching, Planté formation or some other means, and the remainder of layer 168 comprises a solid lead "current-carrying" portion 172. Numeral 174 denotes a second plastic substrate, to one side of which is affixed a relatively thick lead layer arrow 176. About 50% of layer 176 comprises a sponge lead portion 178, and the remainder comprises a solid lead portion 180. The foils may be placed such that the two substrates 166, 174 lie back-to-back as shown, and the aggregate may be considered a single electrode from this point onward. This approach simplifies somewhat the formation process, since the necessity for a protective coating may be eliminated.

It is pointed out that a plurality of foil electrodes as disclosed above may be assembled together to produce a substantially rectangular electrode group, such as group 156 of Figure 16, and this group may be placed in a rectangular jar body along with electrolyte to constitute a cell similar to that illustrated in Figure 3. Alternatively, the foil electrodes may be provided in continuous strip form, interleaved with strips of separator material and wound in a spiral to produce a "jelly roll" type of cylindrical cell. Such a cell, generally denoted by the arrow 182, is illustrated, partially broken away, in Figure 18. In this Figure numeral 184 denotes a positive electrode strip, numeral 186 a negative electrode strip, numeral 188 a strip of thin, low-resistance separator material and numeral 190 a strip of thick, high-resistance separator material.

Figures 19 - 21 illustrate pasted type negative electrodes in which a "recombining" portion may be provided as a part of an otherwise conventional negative electrode. In Figure 19 arrow 192 denotes, in general, one such electrode, comprising a grid structure 194, which may be fabricated from an antimony-free lead alloy, and pasted negative active material portions as 196. An upper portion 198 of grid structure 194 is substantially thicker than the remainder of electrode 192, and outer surfaces of this thicker upper portion 198 are provided with thin layers of negative active material as 200, which comprise "recombining" negative portions. The said thin layers may be provided by etching these surfaces, by Planté forming these surfaces, or by providing the thicker portion 198 with shallow recesses in which pasted active material may be received as shown in Figure 20.

An alternative embodiment of this form of pasted negative electrode is denoted by the arrow 202 in Figure 21. In his embodiment

an upper portion 203 of a grid structure 204 is fitted, on opposite sides thereof, with etched or Planté formed sponge lead strips as 206, which may be riveted to upper portion 203 in a conventional manner to constitute "recombining" negative electrode portions.

Figure 22 illustrates, partially broken away, a battery cell arrow 208 including a plurality of negative electrodes as 210 similar to that shown in Figures 19 and 20. Also included in cell 208 is a plurality of positive electrodes 212, thin, low-resistance separators as 214, and thick, high-resistance separators as 216. An electrolyte body 218 may be substantially absorbed in the various separators, etc. Negative electrodes as 210 include thick upper grid portions as 220, upon which lie thin "recombining" active material layers as 222. Outermost negative electrodes as 224 include thicker upper grid portions as 226 projecting from one side only, and have "recombining" active material layers as 228 on the surfaces of these portions. During charging the portions of the surfaces of the positive electrodes as 212 lying immediately adjacent to "recombining" layers as 222, 228 function as "$O_2$ evolving" portions, and oxygen evolved at these portions passes through thin separators as 214 to recombine at "recombining" portions 222, 228 in the manner previously disclosed. In addition, any other gaseous oxygen which might be evolved at lower portions of positive electrodes as 212 will tend to rise to the top of the cell and will be forced to pass by, and thus be in close proximity to, "recombining" negative portions as 222, 228, where it will be recombined in the manner previously disclosed.

It may also be desired, particularly in the case of tubular positive electrodes, to combine the electrodes with a plastic cover

member overlying the uppermost portion of these positive electrodes. Such an arrangement is shown in Figure 23, wherein a portion of a cell arrow 230, similar in other respects to cell 208 of Figure 22 is illustrated. Positive electrodes as 232 include plastic covers as 234 over their upper sides. In other respects cell 230 is the same as cell 208 of Figure 22.

The arrangement of Figure 23 insures that no oxygen may be evolved at the very top of positive electrodes as 232, where it might escape into space 236 at the top of cell 230 without coming into contact with negative "recombining" portions as 238. Oxygen will only evolve at those portions of the surface of positive electrode as 232 which are below the plastic covers as 234.

In general, in cells of the invention, the thin, low-resistance separators should be fabricated from a microfibrous material, preferably having fibers 1 μm or less in diameter, or from a nonwoven synthetic material. Glass is a preferred material. The thicker, higher-resistance separators may be materials such as microporous rubber, PVC, microporous polyethylene, etc.

Also in general, when separate "recombining" negative electrodes are employed, such as number 60 in Figures 4 and 5, they may be fabricated either as lead foils or as more conventional, pasted negative electrodes having grid structures such as the electrode denoted by the arrow 51 in Figure 5A. In the second instance it may be desirable to increase the conductivity of the grid structure 53. This may be accomplished by fabricating grid structure 53 from copper or some other metal having a conductivity greater than that of lead, and then coating

the entire grid structure with lead. This may increase the magnitude of the current components which pass through the said "recombining" negative electrodes.

## CLAIMS

CLAIM 1. An antimony-free lead-acid battery cell including a jar body, sealed at one end by a cell cover member, in which are received positive and negative electrode means, separator means and an electrolyte body primarily comprising dilute sulfuric acid, positive and negative lug means connected to the positive and negative electrode means respectively and extending through the cell cover in sealed relationship therewith,

characterized in that the positive electrode means comprises "operating" portions and "$O_2$ evolving" portions, and the negative electrode means comprises "operating" portions and "recombining" portions, the capacity of the "operating" portions of the positive and negative electrode means being substantially greater than the capacity of the "$O_2$ evolving" portions of the positive electrode means and the "recombining" portions of the negative electrode means respectively, the "operating" portions of the positive electrode means and the "operating" portions of the negative electrode means being located adjacent to one another and spaced apart from one another by thick, relatively high-resistance separator means, and the "$O_2$ evolving" portions of the positive electrode means and the "recombining" portions of the negative electrode means being located adjacent to one another and spaced apart from one another by thin, relatively low-resistance separator means.

CLAIM 2. The invention of Claim 1 further characterized in that the electrolyte body includes a quantity of $SO_4^-$ ions sufficient to preclude formation of lead hydrates when the cell is in a fully discharged state, and the capacity of the "$O_2$ evolving" portions of the

positive electrode means is limited to a maximum value of 10% of the capacity of the "operating" portions of the positive electrode means, and the capacity of the "recombining" portions of the negative electrode means is limited to a maximum value of 10% of the capacity of the "operating" portions of the negative electrode means.

CLAIM 3. The invention of Claim 2 in which the capacity of the various portions of the positive and negative electrode means and the thicknesses of the separator means are in a relationship such that the density of the electrolyte body is substantially constant throughout the cell at all times.

CLAIM 4. The invention of Claim 1, further characterized in that the distance betwen the "operating" portions of the positive and negative electrode means is substantially greater than the distance between the "$O_2$ evolving" portions of the positive electrode means and the "recombining" portions of the negative electrode means.

CLAIM 5. An antimony-free lead-acid battery cell including a jar body, sealed at one end by a cell member, in which are received positive and negative electrode means, separator means and an electrolyte body primarily comprising dilute sulfuric acid, positive and negative lug means connected to the positive and negative electrode means respectively and extending through the cell cover in sealed relationship therewith,

characterized in that the positive electrode means comprises "operating" portions and "$O_2$ evolving" portions, and the negative electrode means comprises "operating" portions and "recombining" portions, the capacity of the "operating" portions of the positive and negative electrode means being substantially greater than the capacity of the

"$O_2$ evolving" portions of the positive electrode means and the "recombining" portions of the negative electrode means respectively, the "operating" portions of the positive electrode means and the "operating" portions of the negative electrode means being located adjacent to one another and spaced apart from one another by thick, relatively high-resistance separator means, and the "$O_2$ evolving" portions of the positive electrode means and the "recombining" portions of the negative electrode means being located adjacent to one another and spaced apart from one another by thin, relatively low-resistance separator means. and the electrolyte body includes a quantity of $SO_4^{-}$ ions sufficient to preclude formation of lead hydrates when the cell is in a fully discharged state.

CLAIM 6. The invention of Claim 5, further characterized in that the electrolyte body extends above the separator means.

CLAIM 7. The invention of Claim 5, further characterized in that the electrolyte body is fully absorbed in the separator means.

CLAIM 8. The invention of Claim 7 in which the degree of saturation of the separator means is in the range of 70 - 90%.

CLAIM 9. The invention of Claim 5 in which the thin, low-resistance separator means comprises a microfibrous material.

CLAIM 10. The invention of Claim 9 in which the said microfibrous material is glass.

CLAIM 11. The invention of Claim 5 in which the thin, low-resistance separator means comprises a non-woven microporous synthetic material.

CLAIM 12. The invention of Claim 5 in which the thick, high-resistance separator means comprises a microporous material

selected from the group including rubber, polyvinyl chloride, polyethylene and similar materials.

CLAIM 13. An antimony-free rechargeable lead-acid battery cell comprising a jar body, sealed at one end by a cell cover member, in which are received positive and negative electrode means, separator means and an electrolyte body, positive and negative lug means connected to the positive and negative electrode means respectively and extending through the cell cover member in sealed relationship therewith, the negative electrode means comprising a plurality of negative electrodes connected to one another in spaced apart, electrically parallel relationship and the positive electrode means comprising a plurality of positive electrodes interleaved between the negative electrodes and connected to one another in spaced apart, electrically parallel relationship,

characterized in that the negative electrode means also comprises "operating" and "recombining" portions, the capacity of the "operating" portions being substantially greater than the capacity of the "recombining" portions, the positive electrode means also comprises "operating" and "$O_2$ evolving" portions, the capacity of the "operating" portions being substantially greater than the capacity of the "recombining" portions, the "recombining" portions of the negative electrode means and the "$O_2$ evolving" portions of the positive electrode means being located adjacent to one another and spaced apart from one another by thin, low-resistance separator means, the "operating" portions of the positive electrode means and the "operating" portions of the negative electrode means being located adjacent to one another and spaced apart from one another by thick, high-resistance separator means, the electrolyte body including a quantity of $SO_4^{=}$ ions sufficient to preclude formation of lead hydrates when the cell is in a fully charged state.

CLAIM 14. The invention of Claim 13 in which the "recombining" portions of the negative electrode means comprises separate "recombining" negative electrodes.

CLAIM 15. The invention of Claim 14 in which the portions of the positive electrodes facing the said "recombining" negative electrodes constitute "$O_2$ evolving" portions.

CLAIM 16. The invention of Claim 15 in which the said "recombining" negative electrodes are fabricated from foil bodies.

CLAIM 17. The invention of Claim 15 in which the "recombining" negative electrodes include grid structures fabricated from a metal having an electrical conductivity greater than that of lead, and the said grid structures are coated with lead.

CLAIM 18. The invention of Claim 13 in which upper portions of the said negative electrodes constitute "recombining" portions and lower portions of the said negative electrodes constitute "operating" portions.

CLAIM 19. The invention of Claim 18 in which each of the negative electrodes includes a grid structure, an upper portion of which is substantially thicker than and extends outwardly from the remainder of the grid structure and comprises a bar of an antimony-free lead alloy, the said remainder of the grid structure comprising an open latticework fabricated from the same lead alloy, the spaces in the latticework being filled with a negative active material in pasted form and the said upper portion having thin layers of negative active material affixed to sides thereof.

CLAIM 20. The invention of Claim 19 in which the said thin layers of negative active material are produced by etching surfaces of the said upper portion.

CLAIM 21. The invention of Claim 19 in which the said thin layers of active material are produced by Planté formation of the said upper portion.

CLAIM 22. The invention of Claim 19 in which the said upper portion includes shallow recesses in which thin layers of active material in pasted form may be received.

CLAIM 23. An antimony-free lead-acid battery cell comprising a jar body, sealed at one end by a cell cover member, in which are received positive and negative electrode means, separator means and an electrolyte body, positive and negative lug means connected to the positive and negative electrode means respectively and extending through the cell cover member in sealed relationship therewith, the negative electrode means comprising a plurality of negative electrodes connected to one another in spaced apart, electrically parallel relationship and the positive electrode means comprising a plurality of positive electrodes interleaved between the negative electrodes and connected to one another in spaced apart, electrically parallel relationship,

characterized in that each of the negative electrodes includes a grid structure, an upper portion of which is substantially thicker than and extends outwardly from the remainder of the grid structure and comprises a bar of an antimony-free lead alloy, the said remainder of the grid structure comprising an open latticework fabricated from the same lead alloy, the spaces in the latticework being filled with a negative active material in pasted form to constitute an "operating" portion, the said upper portion having thin layers of negative active material affixed to sides thereof to constitute a "recombining" portion having substantially lower capacity than the said "operating" portion.

CLAIM 24. The invention of Claim 23 further characterized

in that the said negative electrodes are spaced apart from the said positive electrodes by separator means, the said separator means comprising thick, high-resistance separator material lying below the "recombining" portions of the negative electrodes and against the surfaces of the "operating" portions of the said negative electrodes, and the said separator means also comprising thin, low-resistance separator material lying against the surface of the said positive electrodes, the surfaces of the "recombining" portions of the negative electrodes and the thick, high-resistance separator material.

CLAIM 25. The invention of Claim 24, further characterized in that the positive electrodes are of tubular construction and include plastic cover members overlying the upper portions of the said positive electrodes.

CLAIM 26. An antimony-free lead-acid battery cell including a jar body, sealed at one end by a cell member, in which are received positive and negative electrode means, separator means and an electrolyte body primarily comprising dilute sulfuric acid, positive and negative lug means connected to the positive and negative electrode means respectively and extending through the cell cover in sealed relationship therewith,

characterized in that the positive electrode means comprises "operating" portions and "$O_2$ evolving" portions, and the negative electrode means comprises "operating" portions and "recombining" portions, the capacity of the "operating" portions of the positive and negative electrode means being substantially greater than the capacity of the "$O_2$ evolving" portions of the positive electrode means and the "recombining" portions of the negative electrode means respectively, the

"operating" portions of the positive electrode means and the "operating" portions of the negative electrode means being located adjacent to one another and spaced apart from one another by thick, relatively high-resistance separator means, and the "$O_2$ evolving" portions of the positive electrode means and the "recombining" portions of the negative electrode means being located adjacent to one another and spaced apart from one another by thin, relatively low-resistance separator means, and the electrolyte body includes a quantity of $SO_4^{-}$ ions sufficient to preclude formation of lead hydrates when the cell is in a fully discharged state, and the said positive and negative electrode means being produced from foil bodies.

CLAIM 27. The invention of Claim 26 in which the said foil bodies, in a "raw" form, comprise a plastic substrate having layers of lead affixed to both sides thereof, the thickness of the lead layer on one side being at least ten times as great as the thickness of the lead layer on the other side.

CLAIM 28. The invention of Claim 27 in which the positive electrode means is produced by electrochemically forming the said lead layers of the "raw" form of foil body into $PbO_2$, the thicker layer constituting an "operating" portion and the thinner layer constituting an "$O_2$ evolving" portion.

CLAIM 29. The invention of Claim 28 in which the negative electrode means is produced by converting the outer 50% of the said lead layers of the "raw" form of foil body into sponge lead, the thicker layer constituting an "operating" portion and the thinner layer constituting a "recombining" portion.

CLAIM 30. The invention of Claim 29 in which the "raw"

form of foil body from which the negative electrodes are produced occurs as two separate foil bodies, each comprising a plastic substrate having a layer of lead affixed to one side thereof, and arranged back-to-back such that the substrates are in abutting relationship to one another.

CLAIM 31. The invention of any one of Claims 29-30 in which the lead layers are converted to sponge lead by etching.

CLAIM 32. The invention of any one of Claims 29-30 in which the lead layers are converted to sponge lead by a Planté formation process.

CLAIM 33. The invention of Claim 1, further characterized in that the "recombining" portions of the negative electrode means, the thin, low-resistance separator means and the electrolyte body cooperate to recombine oxygen, which may be evolved at the said "$O_2$ evolving" portions of the positive electrode means during a charging process, into water, which is returned to the electrolyte body.

CLAIM 34. The invention of Claim 1, further characterized in that the "$O_2$ evolving" portions of the positive electrode means, the "recombining" portions of the negative electrode means, the thin, low-resistance separator means and the electrolyte body cooperate to limit the cell voltage to a maximum value of 2.40 volts during a constant-current charging process.

CLAIM 35. An antimony-free, rechargeable lead-acid battery comprising a plurality of battery cells electrically connected in series configuration, positive and negative terminal posts connected at opposite ends of the said series configuration, each cell including at least positive electrode means, negative electrode means, separator means and an electrolyte body received together in an enclosure body,

characterized in that the positive electrode means comprises "operating" portions and "$O_2$ evolving" portions, and the negative electrode means comprises "operating" portions and "recombining" portion; the capacity of the "operating" portions of the positive and negative electrode means being substantially greater than the capacity of the "$O_2$ evolving" portions of the positive electrode means and the "recombining" portions of the negative electrode means respectively, the "operating" portions of the positive electrode means and the "operating" portions of the negative means being located adjacent to one another and spaced apart from one another by thick, relatively high-resistance separator means, and the "$O_2$ evolving" portions of the positive electrode means and the "recombining" portions of the negative electrode means being located adjacent to one another and spaced apart from one another by thin, relatively low-resistance separator means, and the "$O_2$ evolving" portions of the positive electrode means, the "recombining" portions of the negative electrode means, the thin low-resistance separator means and the electrolyte body cooperate to limit the cell voltage to a maximum value of 2.40 volts during a constant-current charging process.

CLAIM 36. An electrode set for inclusion in an antimony-free rechargeable lead-acid cell of otherwise conventional construction, the said cell including at least a plurality of conventional negative electrodes spaced apart from one another and electrically connected to one another in parallel configuration, a plurality of conventional positive electrodes interleaved therebetween and electrically connected to one another in parallel configuration, conventional separator means interleaved between the positive and negative electrodes, and an electrolyte body, the said electrode set comprising a "recombining" negative

electrode having a capacity limited to a maximum value of 10% of the capacity of any one of the conventional negative electrodes in the cell and being electrically connected to the said conventional negative electrodes in parallel configuration, thin separator members having a thickness limited to a maximum value of 10% of the thickness of the conventional separator means in the cell and having a resistance limited to a maximum value of 10% of the resistance of the said conventional separator means, the said thin separator members being located against the surfaces of the "recombining" negative electrode, a pair of thin positive electrodes, each located outside and against opposite surfaces of the thin separator members, each having a capacity equivalent to at least 55% of the capacity of any one of the conventional negative electrodes, and each electrically connected to the said conventional positive electrodes in parallel configuration, the said electrode set being operable to replace any one of the conventional positive electrodes in the cell, to recombine evolved oxygen and to limit cell voltage during a constant-current charging process to a maximum value of 2.40 volts.

CLAIM 37. An electrode set for inclusion in an antimony-free rechargeable lead-acid cell of otherwise conventional construction, the said cell including at least a plurality of conventional negative electrodes spaced apart from one another and electrically connected to one another in parallel configuration, a plurality of conventional positive electrodes interleaved therebetween and electrically connected to one another in parallel configuration, conventional separator means interleaved between the positive and negative electrodes, and an electrolyte body, the said electrode set comprising a thin, "$O_2$ evolving" positive electrode having a capacity substantially lower than the capacity of any one of the conventional positive electrodes in the cell, and being electrically connected to the said conventional positive electrodes in parallel configuration, thin separator members being substantially thinner than and having a substantially lower resistance than the conventional separator means in the cell, the said thin separator members being located against the surfaces of the "$O_2$ evolving" positive electrode, a pair of thin "recombining" negative electrodes, each located outside and against opposite surfaces of the thin separator member, each having a capacity limited to a maximum value of 5% of the capacity of any one of the conventional negative electrodes in the cell, and each being electrically connected to the said conventional negative electrodes in parallel configuration, and the said electrode set being operable to recombine evolved oxygen and to limit cell voltage during a constant-current charging process to a maximum value of 2.40 volts.

CLAIM 38. The invention of Claim 37 in which the "$O_2$ evolving" positive electrode and the "recombining" negative electrodes comprise foil bodies.

CLAIM 39. The invention of Claim 38 in which the "$O_2$ evolving" positive electrode comprises a foil body including a central plastic substrate having a layer of $PbO_2$ on either side.

CLAIM 40. The invention of Claim 39 in which the "recombining" negative electrodes comprise foil bodies each including a plastic substrate having a layer of lead affixed to one side thereof, and the outer portion of the said lead layer comprises "sponge" lead while the inner portion of the said lead layer comprises solid lead, which solid lead functions solely as current carrying means.

CLAIM 41. The invention of Claim 40 in which the thickness

of the said "sponge" lead is substantially equal to the thickness of the said solid lead.

CLAIM 42. The invention of Claim 41 in which each of the $PbO_2$ layers of the "$O_2$ evolving" positive electrode has a capacity substantially greater than the capacity of the "sponge" lead of the "recombining" negative electrodes.

CLAIM 43. An electrode set for inclusion in an antimony-free rechargeable lead-acid cell of otherwise conventional construction, the said cell including at least a plurality of conventional negative electrodes spaced apart from one another and electrically connected to one another in parallel configuration, a plurality of conventional positive electrodes interleaved therebetween and electrically connected to one another in parallel configuration, conventional separator means interleaved between the positive and negative electrodes, and an electrolyte body, the said electrode set comprising a "recombining" negative electrode having a capacity limited to a maximum value of 10% of the capacity of any one of the conventional negative electrodes in the cell and being electrically connected to the said conventional negative electrodes in parallel configuration, the said "recombining" negative electrode comprising a foil body including a plastic substrate having a layer of lead affixed to one side thereof, the outer portion of the said lead layer comprising "sponge" lead and the inner portion of the said lead layer comprising solid lead, the said solid lead functioning solely as current carrying means, a thin, low-resistance separator member lying adjacent to and abutting the said "sponge" lead, and an "$O_2$ evolving" positive electrode comprising a foil body including a plastic substrate having a layer of $PbO_2$ affixed to one side thereof, the said

"$O_2$ evolving" positive electrode being electrically connected to the said conventional positive electrodes in the cell and being arranged such that the $PbO_2$ layer abuts the thin, low-resistance separator member on a side opposite the "recombining" negative electrode, and the said electrode set being operable to recombine evolved oxygen and to limit cell voltage during a constant-current charging process to a maximum value of 2.40 volts.

CLAIM 44. The invention of Claim 43 in which the thickness of the thin separator members is limited to a maximum value of 10% of the thickness of the said conventional separator means.

CLAIM 45. The invention of Claim 44 in which the thickness of the said "sponge" lead is substantially equal to the thickness of the said solid lead.

CLAIM 46. The invention of Claim 45 in which the $PbO_2$ layer of the "$O_2$ evolving" positive electrode has a capacity substantially greater than the capacity of the "sponge" lead of the "recombining" negative electrodes.

Fig.1

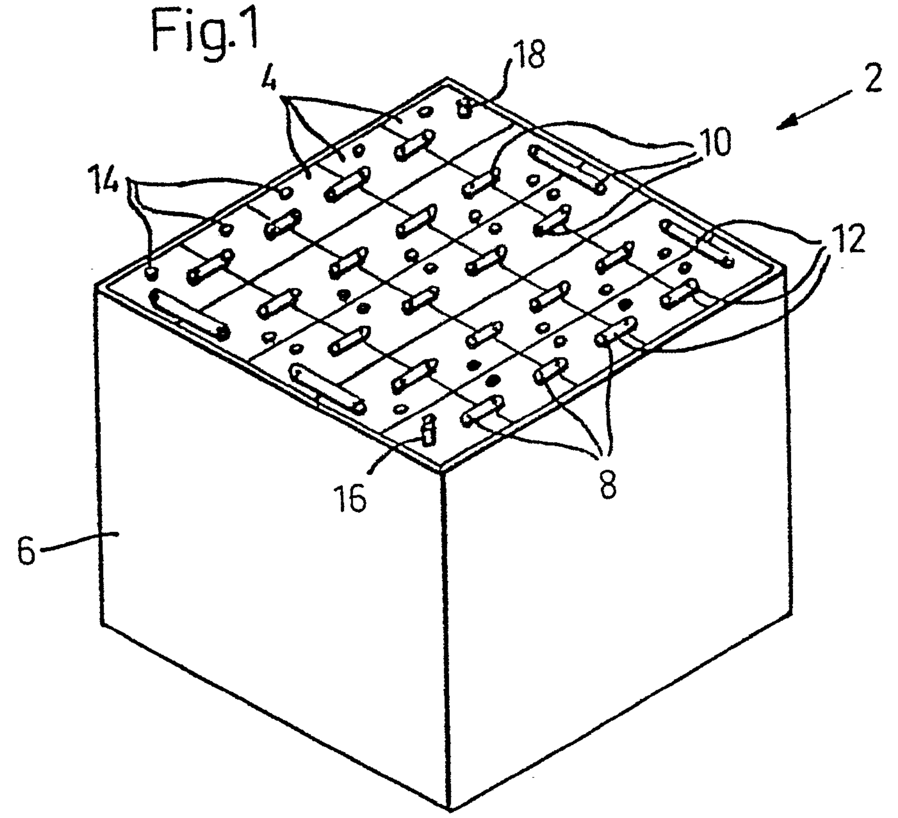


Fig. 2

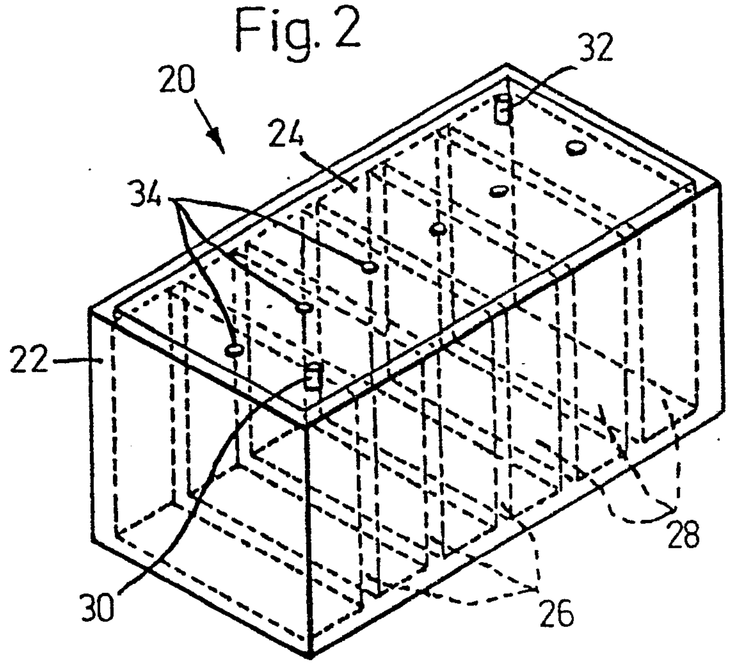


Fig. 3

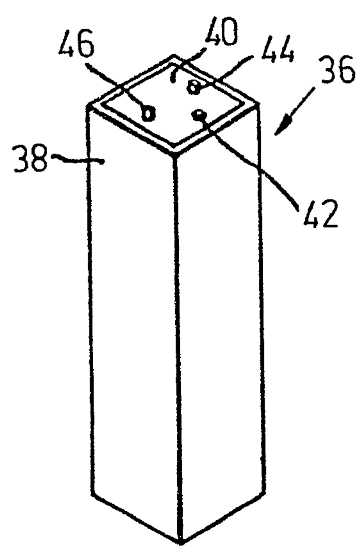

Fig. 4

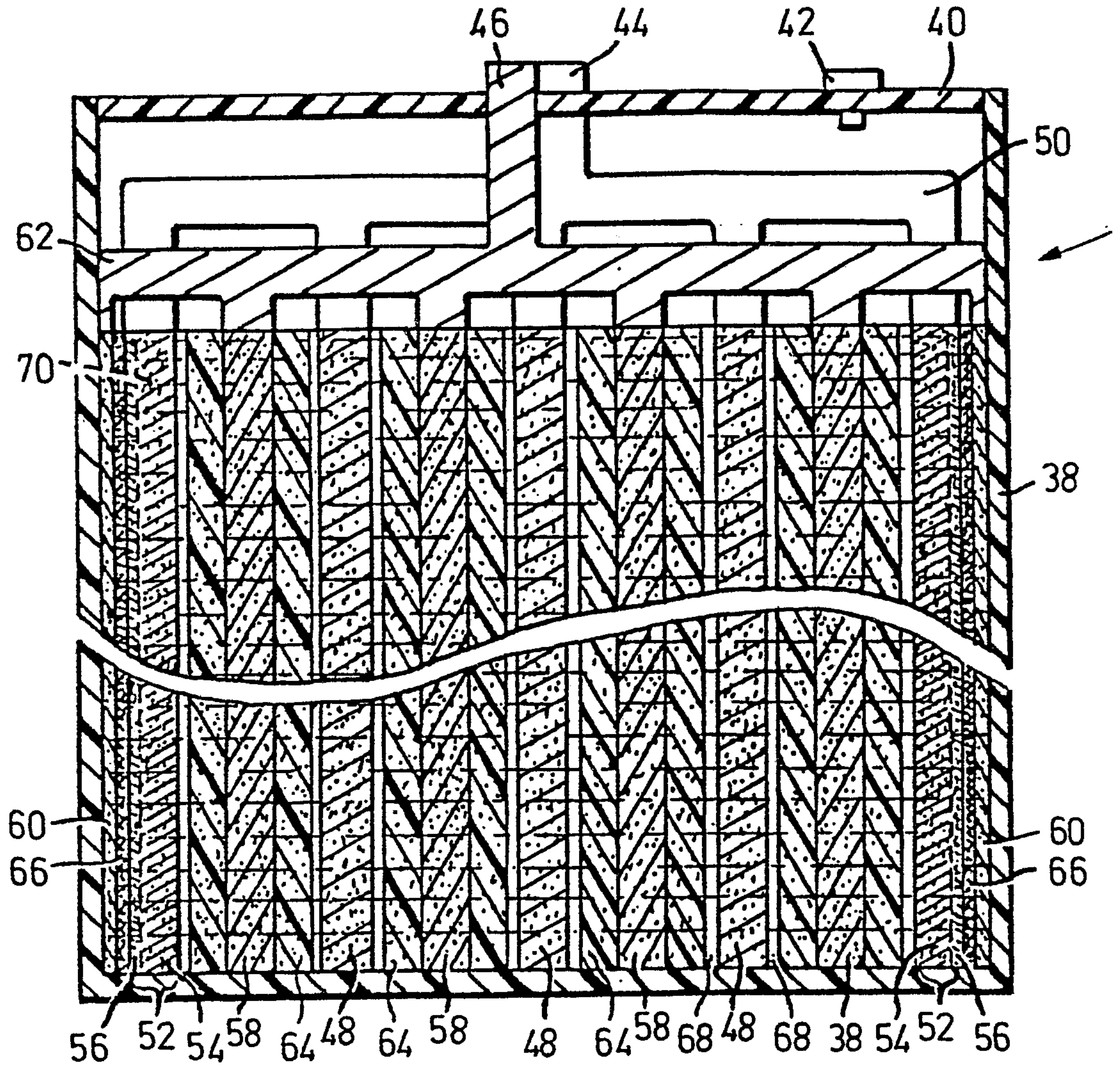
46
44
42
40
50
36
62
70
38
60
66
60
66
56
52
54
58
64
48
64
58
48
64
58
68
48
68
38
54
52
56

Fig. 5

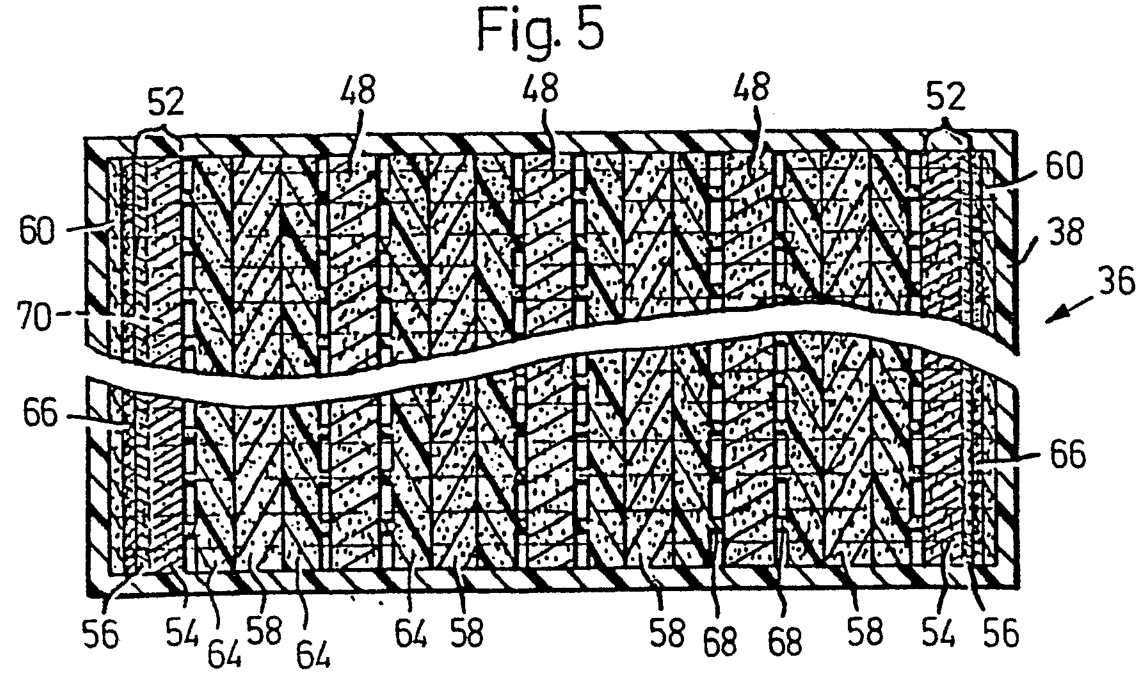
52
48
48
48
52
60
38
36
60
70
66
66
56
54
64
58
64
64
58
58
68
68
58
54
56

Fig.5A

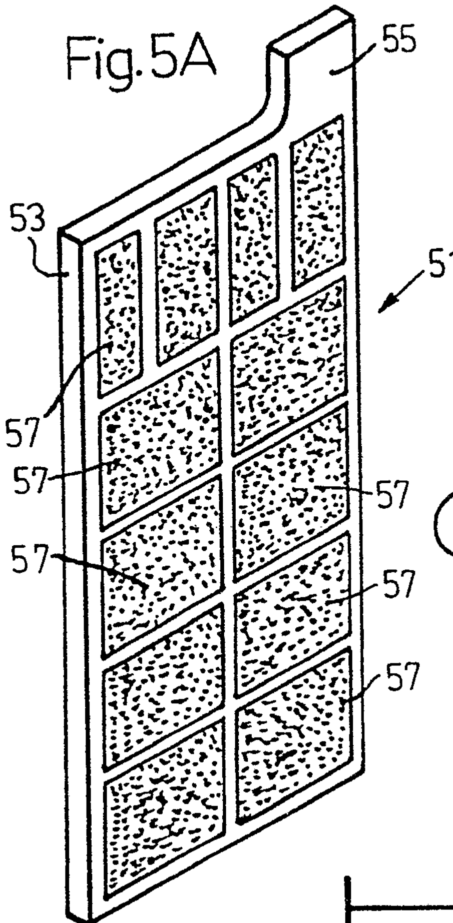


Fig. 6

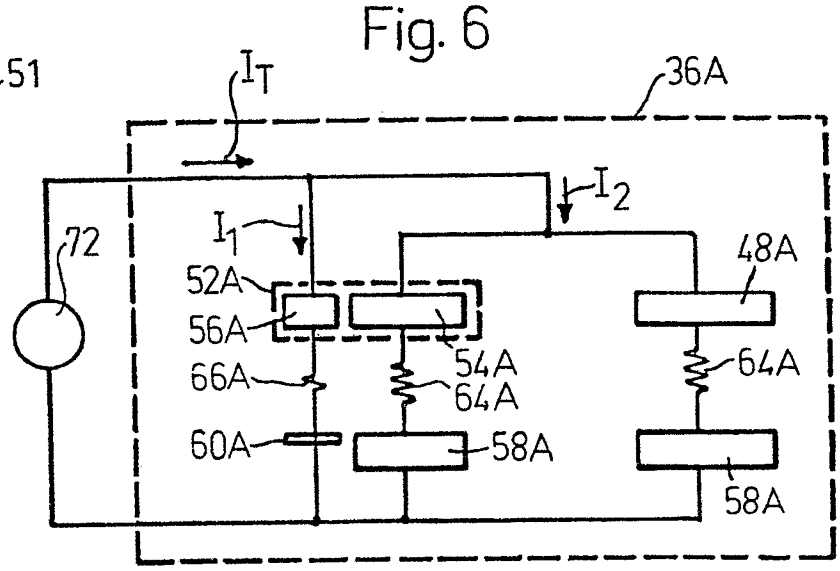


Fig.7

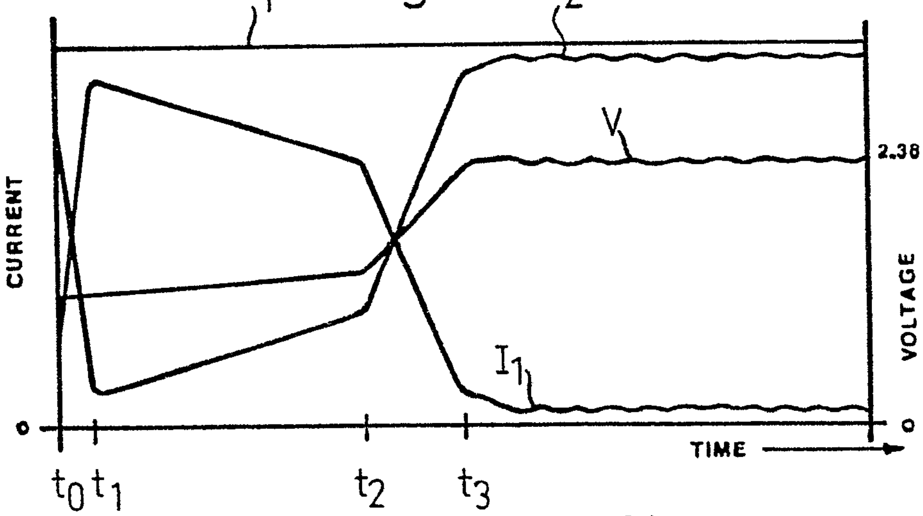


Fig.8

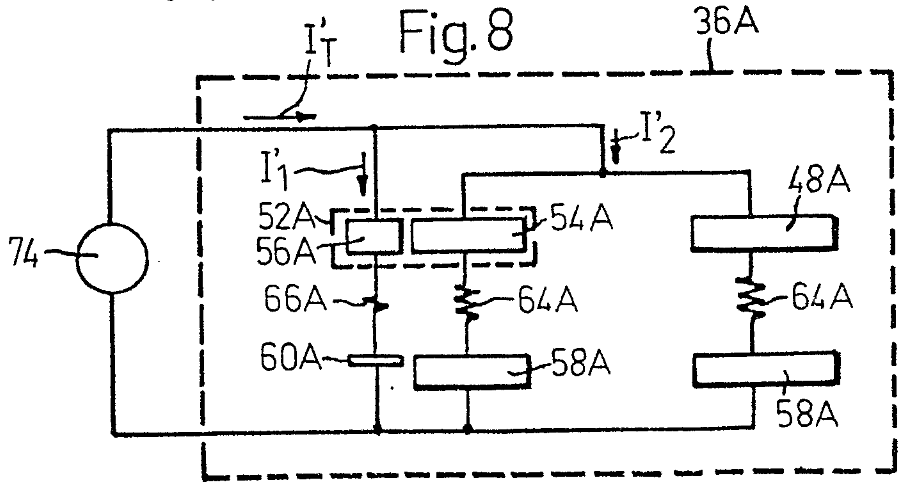

Fig. 9

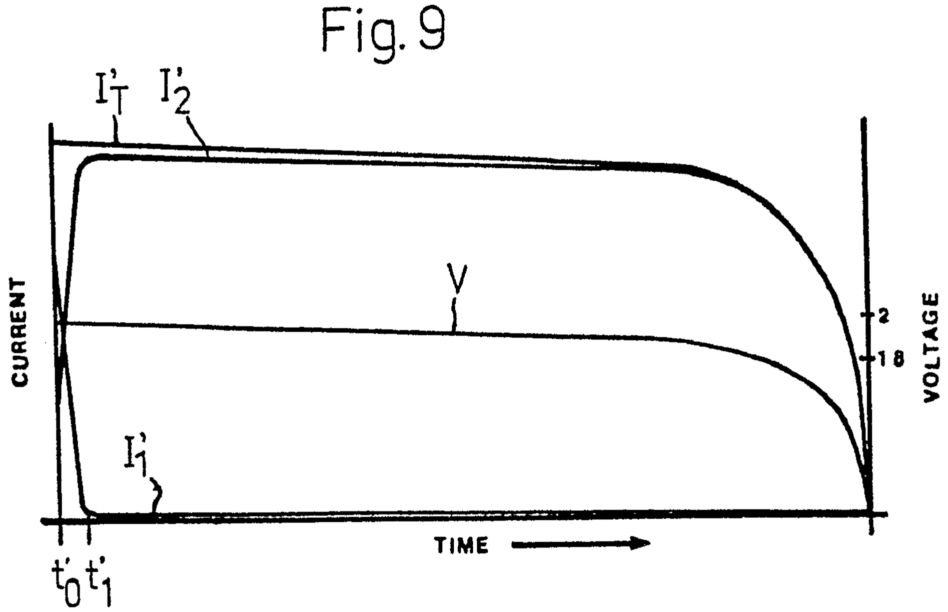


Fig. 10

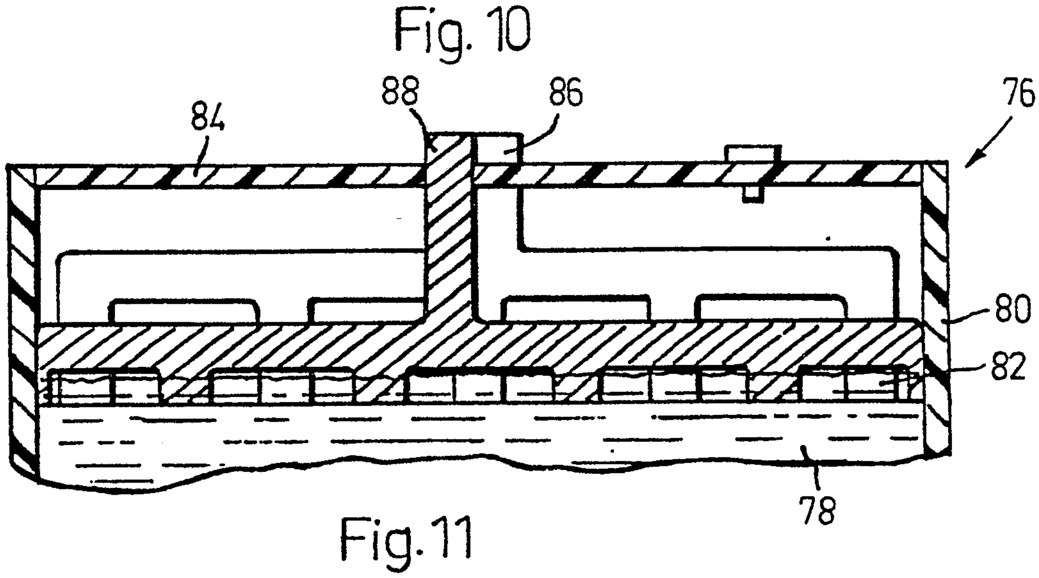


Fig. 11

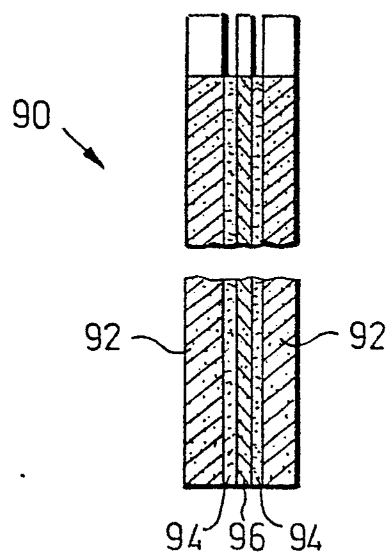

Fig.12

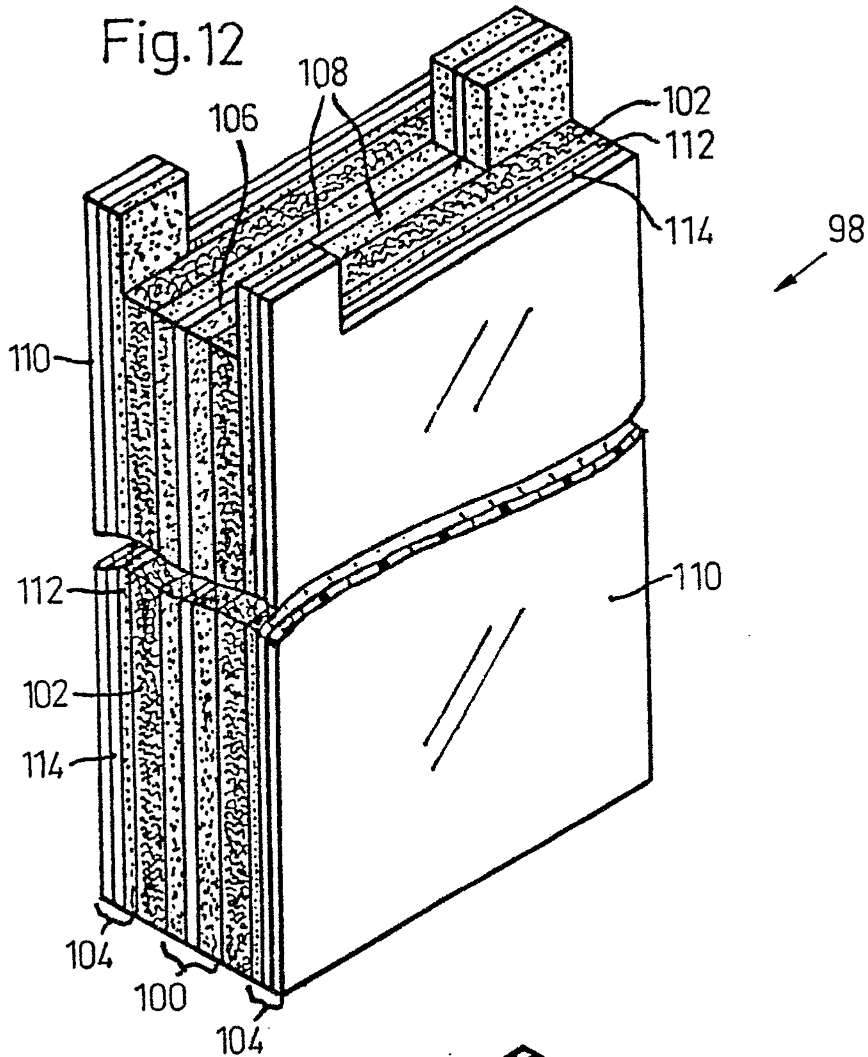
108
106
102
112
114
98
110
110
112
102
114
104
100
104

Fig.13

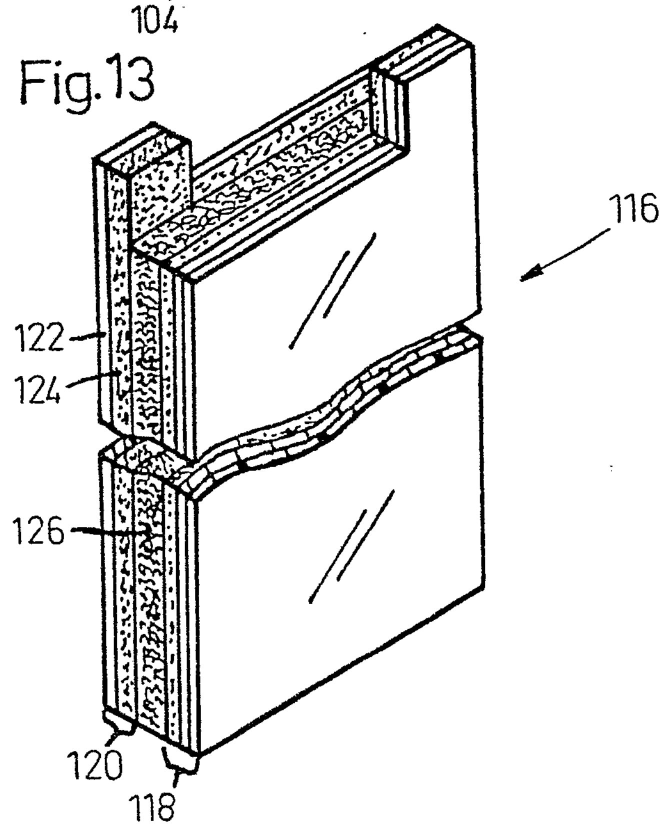
116
122
124
126
120
118

Fig. 14

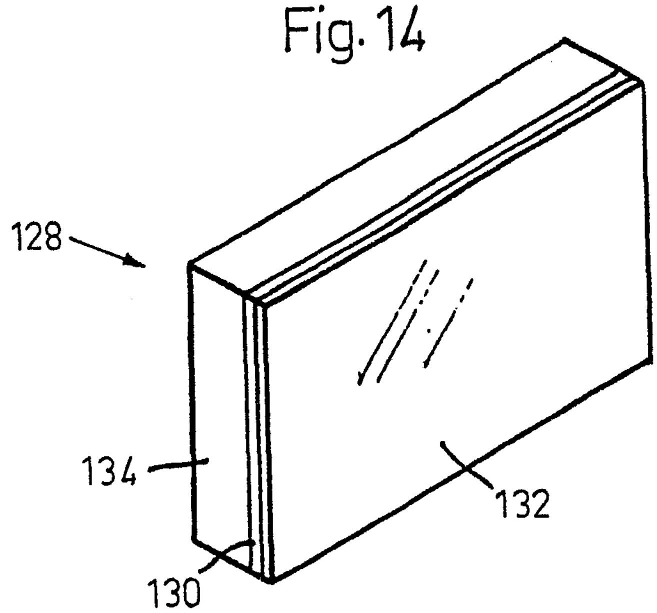


Fig. 15

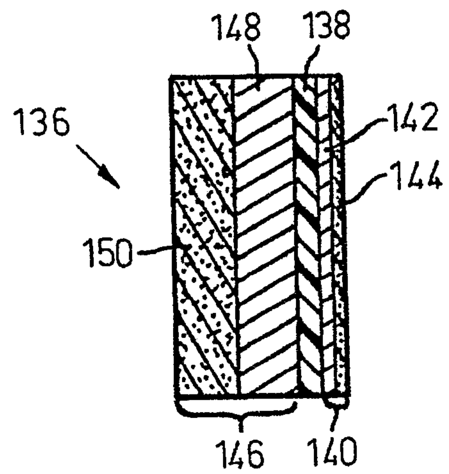


Fig. 16

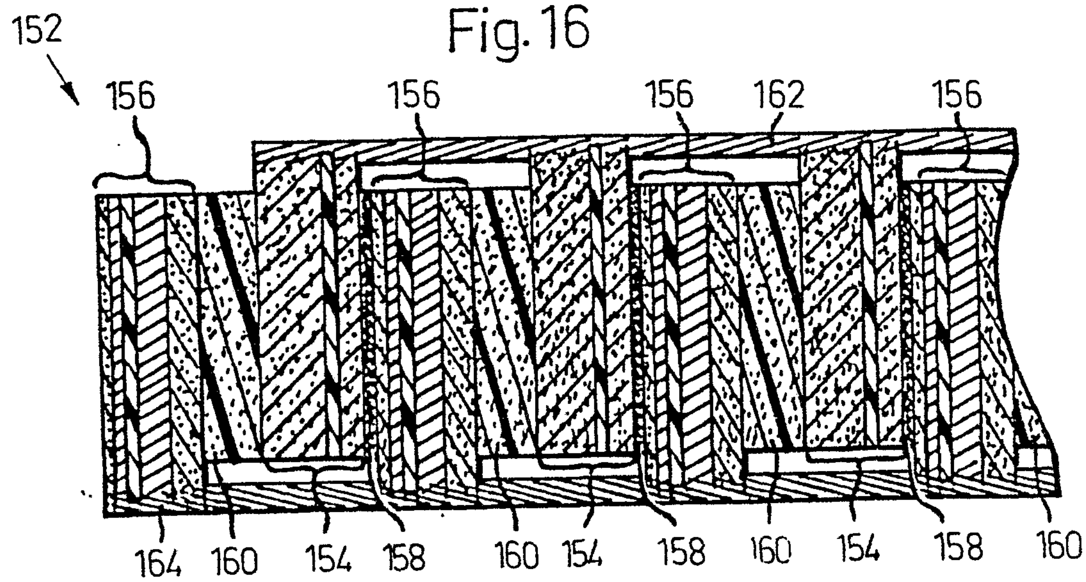

Fig. 17

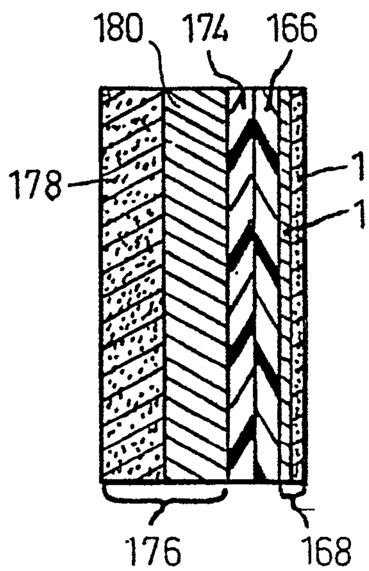


Fig. 18

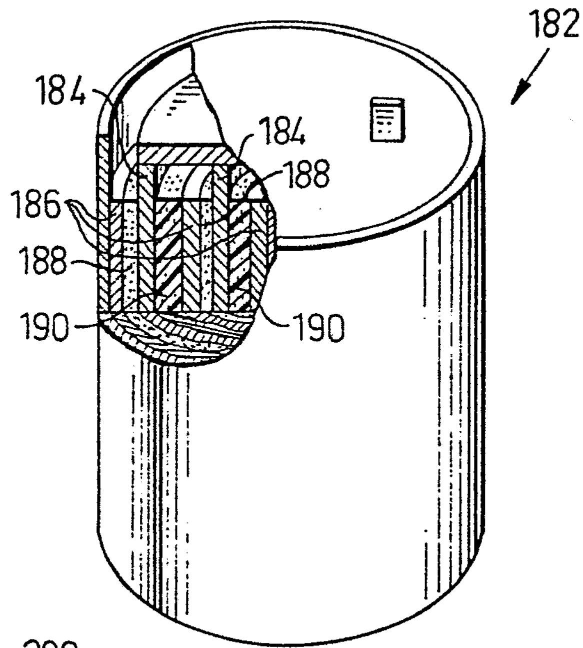


Fig. 19

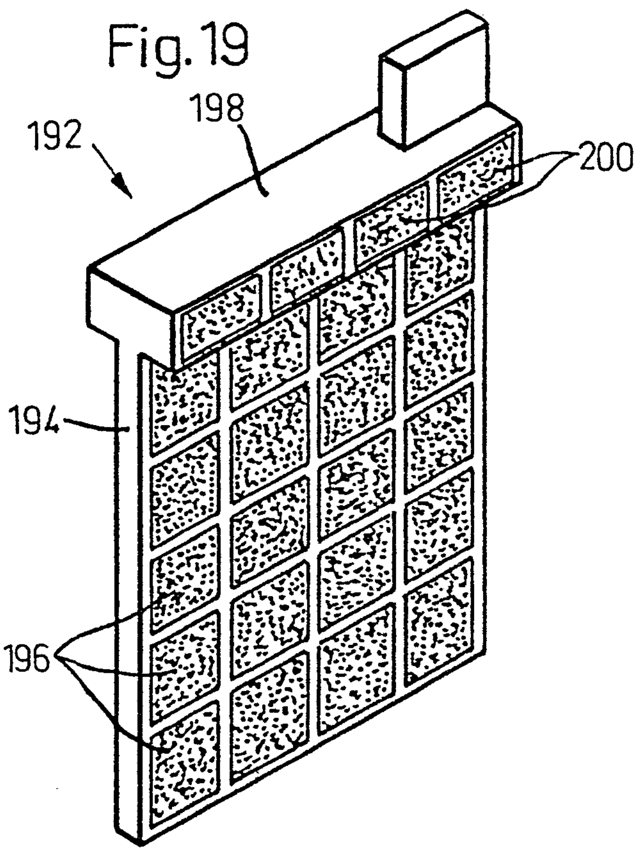


Fig. 20

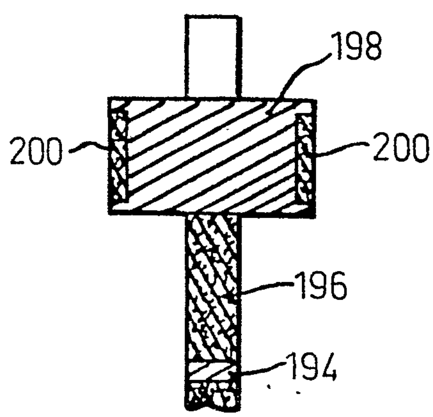

Fig. 21

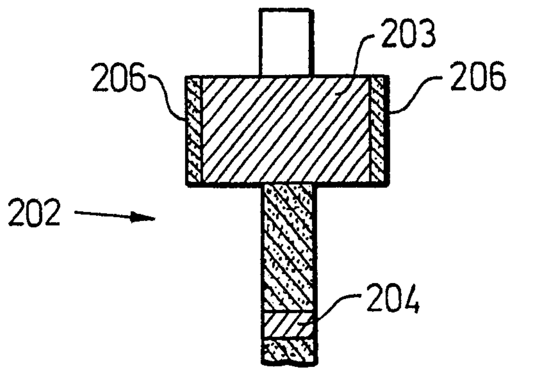


Fig. 22

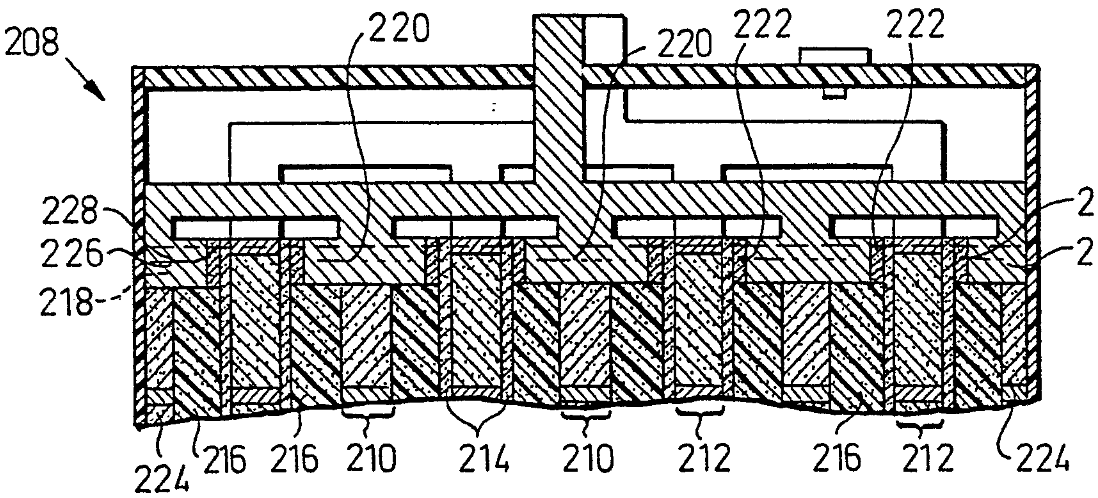


Fig. 23

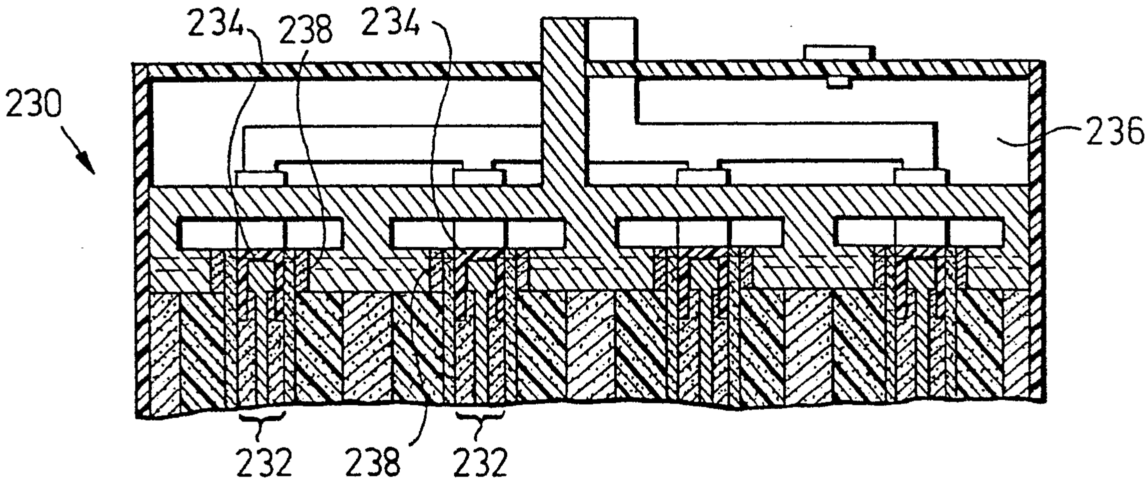

European Patent Office

**EUROPEAN SEARCH REPORT**

0162996

Application number

EP 84 85 0167

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 119 772 (KENNETH PETERS)<br>* column 1, lines 33-68; column 2, lines 1-4; column 3, lines 11-68; column 4, lines 1-42; column 7, lines 10-55; column 10, lines 21-37; column 11, lines 9-68 *<br>--- | 1-5,7-18,26,33 | H 01 M 10/34 |
| Y | FR-A-1 246 427 (ACCUMULATOREN-FABRIK AG)<br>* page 1, left-hand column, last paragraph; page 2; abstract, point 9 *<br>--- | 1-5,7-18,26,33 | |
| Y | GB-A- 447 757 (ACCUMULATOREN-FABRIK AG)<br>* page 1, lines 64-95 *<br>--- | 1 | TECHNICAL FIELDS SEARCHED (Int. Cl.4) |
| A | GB-A-2 086 643 (DNEPROPETROVSKY KHIMIKO-TEKHNOLOGICHESKY INSTITUT IMENI F E DZERZHINSKOGO)<br>* abstract; page 2, lines 9-61 *<br>--- | 1 | H 01 M 10/34<br>H 01 M 10/52 |
| A | US-A-3 350 225 (HARVEY N. SEIGER)<br>* column 8, lines 18-75; column 9 *<br>--- -/- | 1 | |

The present search report has been drawn up for all claims

| Place of search | Date of completion of the search | Examiner |
|---|---|---|
| THE HAGUE | 31-01-1985 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

# EUROPEAN SEARCH REPORT

0162996

Application number

EP 84 85 0167

Page 2

| Category | DOCUMENTS CONSIDERED TO BE RELEVANT<br>Citation of document with indication, where appropriate, of relevant passages | Relevant to claim | CLASSIFICATION OF THE APPLICATION (Int. Cl.4) |
|---|---|---|---|
| A | EP-A-0 070 646 (CHLORIDE GROUP PUBLIC LTD.)<br>* abstract; pages 8,9,10,11 *<br>--- | 1 | |
| A | FR-A-2 101 193 (THE GATES RUBBER CO.)<br>* page 6, lines 33-40; pages 7,8; page 11, lines 1-16; page 13, lines 5-40; page 14 *<br>--- | 1,5,7-10 | |
| A | PATENTS ABSTRACTS OF JAPAN, vol. 8, no. 149 (E-255)[1586], 12th July 1984; & JP - A - 59 56 356 (MATSUSHITA DENKI SANGYO K.K.) 31-03-1984<br>----- | 1,23 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 31-01-1985 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document